# EUROPÄISCHE PATENTSCHRIFT

(11) **EP 4 353 372 B1**
(45) Veröffentlichungstag und Bekanntmachung des Hinweises auf die Patenterteilung: **31.07.2024**
(21) Anmeldenummer: 22200988.8
(22) Anmeldetag: 12.10.2022
(51) Int. Cl.: B09B 3/40, C22B 7/00, C22B 11/02, H01M 8/008, B09B 101/95

(54) **VERFAHREN ZUR VERASCHUNG FLUOR- UND EDELMETALLHALTIGEN ABFALLS**
PROCESS FOR INCINERATION OF WASTE CONTAINING FLUORINE AND PRECIOUS METAL
PROCÉDÉ POUR L'INCINÉRATION DE DÉCHETS CONTENANT DU FLUOR ET DES MÉTAUX PRÉCIEUX

(43) Veröffentlichungstag der Anmeldung: 17.04.2024
(73) Patentinhaber: Heraeus Precious Metals GmbH & Co. KG, 63450 Hanau (DE)
(72) Erfinder: NOWOTTNY, Christian, 63450 Hanau (DE); OEHMEN, Thomas, 63450 Hanau (DE); SCHAEFER, Dieter, 63450 Hanau (DE)
(74) Vertreter: Heraeus IP

(56) Entgegenhaltungen:
- EP-A1- 2 700 726
- DE-A1- 102011 016 860

## Beschreibung

Die Erfindung betrifft ein Verfahren zur Veraschung fluor- und edelmetallhaltigen Abfalls. Der nach Durchführung des Verfahrens erhaltene edelmetallangereicherte Ascherückstand kann aufgearbeitet werden zwecks Rückgewinnung darin enthaltenen Edelmetalls.

Hierin wird der Begriff "Edelmetall" verwendet. Edelmetalle im Sinne der vorliegenden Erfindung sind Silber, Ruthenium, Rhodium, Palladium, Iridium und Platin, jeweils alleine oder in beliebiger Kombination zweier, mehrerer oder aller dieser Metalle.

EP 2 700 726 A1 offenbart ein mit dem Ziel der Edelmetallanreicherung erfolgendes Verfahren zur Veraschung fluor- und edelmetallhaltigen Abfalls. Bei der Veraschung solchen Abfalls entsteht unter anderem Fluorwasserstoff respektive Flusssäure. Als thermische Behandlungsanlage, in welcher die Veraschung erfolgt, offenbart EP 2 700 726 A1 einen Kammerofen mit einer feuerfesten Isolierauskleidung in Form einer Stampfmasse im Inneren der Ofenkammer, wobei die feuerfeste Isolierauskleidung einen hohen Anteil an Aluminiumoxid von 85 Gew.-% (Gewichts-%) oder mehr, insbesondere von 88 Gew.-% oder mehr aufweist. Die feuerfeste Isolierauskleidung kann neben Aluminiumoxid als weitere Bestandteile auch Calciumoxid und Siliziumdioxid in unterschiedlichen Anteilen umfassen. Trotz des Anteils von bis zu 15 Gew.-%, insbesondere von bis zu 12 Gew.-% an Calciumoxid und/oder Siliziumdioxid in der Stampfmasse wird diese laut EP 2 700 726 A1 von Flusssäure nicht angegriffen. EP 2 700 726 A1 führt aus, dass sich das offenbarte Verfahren bevorzugt eigne zur Verarbeitung solcher Materialien, die einen Fluoranteil bis zu 5 Gew.-% aufweisen. Bevorzugt setze man bei dem Verfahren als Abfallmaterialien, die der Wärmebehandlung ausgesetzt werden, fluororganische Materialien, PTFE-Folien, Brennstoffzellen, Katalysatoren und/oder Pasten ein. Grundsätzlich eigne sich das Verfahren für alle Materialien mit einem Fluoranteil bis zu 5 Gew.-%, welche sich bei einer Temperatur von etwa 800 °C, insbesondere von etwa 600 °C zersetzen, d.h. unterhalb, spätestens jedoch bei Erreichen besagter Temperatur von etwa 800 °C, insbesondere von etwa 600 °C.

Aufgabe der vorliegenden Erfindung war es, ein der Edelmetallanreicherung dienendes Verfahren zur Veraschung fluor- und edelmetallhaltigen Abfalls mit besonders hohem Fluoranteil zu finden. Es hatte sich nämlich herausgestellt, dass das aus EP 2 700 726 A1 bekannte Verfahren an Grenzen stößt, sobald der Fluoranteil im zu veraschenden fluor- und edelmetallhaltigen Material 5 Gew.-% übersteigt, insbesondere wenn dies regelmäßig beispielsweise bei jeder oder bei im Wesentlichen jeder Charge der Fall ist.

Die Aufgabe konnte gelöst werden durch ein Verfahren zur Veraschung fluor- und edelmetallhaltigen Abfalls in einem Kammerofen, wobei der Fluoranteil des Abfalls im Bereich von >5 bis 70 Gew.-% und der Edelmetallanteil des Abfalls im Bereich von 0,1 bis 30 Gew.-% liegt und wobei die Ofenkammer (der Ofenraum, das Ofeninnere) des Kammerofens ausgekleidet ist mit einem Chromkorundmaterial umfassend ≥80 Gew.-% alpha-Al₂O₃, 1 bis 20 Gew.-% Cr₂O₃ und 0 bis 5 Gew.-% SiOz.

Das erfindungsgemäße Verfahren umfasst die aufeinanderfolgenden Schritte: (1) Einbringen eines zu veraschenden fluor- und edelmetallhaltigen Abfalls mit einem Fluoranteil im Bereich von >5 bis 70 Gew.-% und einem Edelmetallanteil im Bereich von 0,1 bis 30 Gew.-% in die Ofenkammer eines Kammerofens, (2) Veraschen des Abfalls, und (3) Entnahme der nach Abschluss von Schritt (2) gebildeten Asche, wobei die Ofenkammer des Kammerofens ausgekleidet ist mit einem Chromkorundmaterial umfassend ≥80 Gew.-% alpha-Al₂O₃, 1 bis 20 Gew.-% Cr₂O₃ und 0 bis 5 Gew.-% SiOz.

Falls der Fluoranteil und/oder der Edelmetallanteil eines mittels des erfindungsgemäßen Verfahrens zu veraschenden fluor- und edelmetallhaltigen Abfalls nicht unmittelbar bekannt ist, kann dieser / können diese mit üblichen dem Fachmann bekannten Analyseverfahren bestimmt werden. Der Fachmann wird das oder die Analyseverfahren in Abhängigkeit von der Abfallart wählen. So kann der Abfall falls notwendig zunächst - zumindest makroskopisch betrachtet - homogenisiert werden. Der Fluoranteil einer Abfallprobe kann beispielsweise mittels Verbrennungsaufschluss (Pyrohydrolyse) mit anschließender ionenchromatographischer Bestimmung (Combustion IC) bestimmt werden. Zur Bestimmung des Edelmetallanteils kann eine Abfallprobe beispielsweise direkt oder nach Veraschen im Laborofen mittels Röntgenfluoreszenzanalyse untersucht werden; alternativ können die Edelmetallanteile der Asche nasschemisch beispielsweise mittels Königswasser in eine wässrige Lösung überführt und beispielsweise mittels ICP-OES-Analyse bestimmt werden.

Das erfindungsgemäße Verfahren ist ein diskontinuierliches Verfahren, es kann chargenweise betrieben werden, wobei nacheinander gleiche, ähnliche oder verschiedene Chargen zu veraschenden fluor- und edelmetallhaltigen Abfalls jeweils gemäß der erfindungsgemäßen Verfahrensweise, d.h. entsprechend der Schrittfolge (1)-(2)-(3) verascht werden können. Hierin ist von gleichen, ähnlichen oder verschiedenen Chargen zu veraschenden fluor- und edelmetallhaltigen Abfalls die Rede; die einzelnen Chargen können sich also hinsichtlich ihrer qualitativen und/oder quantitativen Zusammensetzung unterscheiden, immer handelt es sich dabei jedoch um Chargen zu veraschenden fluor- und edelmetallhaltigen Abfalls mit einem Fluoranteil im Bereich von >5 bis 70 Gew.-% und einem Edelmetallanteil im Bereich von 0,1 bis 30 Gew.-%. Die Ofenkammer wird beim chargenweisen Betrieb mit einer zu veraschenden Abfallcharge beschickt (Einbringen einer zu veraschenden Abfallcharge in die Ofenkammer), die Abfallcharge wird verascht, nach dem Veraschen aus der Ofenkammer entnommen; anschließend beginnt der durch die Schrittfolge (1)-(2)-(3) gekennzeichnete Ablauf mit der nächsten Abfallcharge erneut. Für den Fachmann an sich unnötig zu erwähnen, dass die Temperatur der Ofenkammer des Kammerofens zwischen Entnahme einer veraschten Abfallcharge und erneuter Beschickung der Ofenkammer mit einer zu veraschenden Folgecharge absinkt. Nicht zuletzt aus Energieeffizienzgründen wird diese Abkühlung der Ofenkammer jedoch bevorzugt so weit als möglich gering gehalten und die Beschickung mit einer Folgecharge möglichst zeitnah verwirklicht. Beispielsweise wird ein Abkühlen des Ofenkammerinneren auf eine Temperatur unterhalb des Bereichs von 400 bis 600°C möglichst vermieden. Anders ausgedrückt, das erfindungsgemäße Verfahren kann nicht nur unter dem Aspekt der Energieersparnis, sondern auch mit Blick auf eine hohen Anlagennutzungsgrad vorzugsweise im Dauerbetrieb durchgeführt werden. Der hierin verwendete Begriff "Dauerbetrieb" bezieht sich auf eine fortwährende chargenweisen Wiederholung des erfindungsgemäßen Verfahrens im selben Kammerofen, und dabei vorzugsweise mit zeitlich möglichst geringen, der Beschickung und Entnahme geschuldeten Unterbrechungen zwischen den jeweiligen Veraschungszyklen.

Hierin wird der Begriff "Veraschung" verwendet; er bezeichnet eine Aschebildung durch Pyrolyse (thermische Zersetzung, Verschwelen) und/oder Oxidation, wobei letztere insbesondere als Verbrennung erfolgt. Im Allgemeinen beinhaltet das Veraschen beim erfindungsgemäßen Verfahren sowohl Pyrolyse als auch Oxidation respektive Verbrennung, wobei Pyrolyse- und Oxidationsvorgänge zeitlich nacheinander oder zeitlich parallel ablaufen können, gegebenenfalls auch im Wechsel. Dies kann unter anderem von der Art des zu veraschenden fluor- und edelmetallhaltigen Abfalls und seiner Darbietung in der Ofenkammer, von der Temperaturführung in der Ofenkammer und vom darin gemachten Luft- oder Sauerstoffangebot abhängen.

Hierin wird unterschieden zwischen dem im erfindungsgemäßen Verfahren zu veraschenden fluor- und edelmetallhaltigen Abfall und dem im erfindungsgemäßen Verfahren veraschten fluor- und edelmetallhaltigen Abfall. Bei dem im erfindungsgemäßen Verfahren veraschten fluor- und edelmetallhaltigen Abfall handelt es sich um das Produkt des erfindungsgemäßen Verfahrens, d.h. um eine Asche. Das erfindungsgemäße Verfahren führt zu einer Edelmetallanreicherung und die Asche zeichnet sich daher aus durch einen höheren Edelmetallanteil als der des ursprünglichen zu veraschenden fluor- und edelmetallhaltigen Abfalls.

Bei dem im erfindungsgemäßen Verfahren zu veraschenden fluor- und edelmetallhaltigen Abfall handelt es sich nicht um üblichen Haus- oder Gewerbemüll, welcher Fluor und Edelmetall in jeweils niedrigem Anteil enthalten kann, beispielsweise weniger als 3 Gew.-% Fluor und weniger als 0,05 Gew.-% Edelmetall. Vielmehr handelt es sich bei dem zu veraschenden fluor- und edelmetallhaltigen Abfall um einen solchen mit einem vergleichsweise hohen Fluoranteil im Bereich von >5 bis 70 Gew.-% und einem vergleichsweise hohen Edelmetallanteil im Bereich von 0,1 bis 30 Gew.-%, wobei der vergleichsweise hohe Anteil wertvollen Edelmetalls eine Edelmetallrückgewinnung nicht nur rechtfertigt, sondern unter dem Gesichtspunkt der Ressourcenschonung geradezu verlangt. So kann es sich bei dem im erfindungsgemäßen Verfahren zu veraschenden fluor- und edelmetallhaltigen Abfall beispielsweise um Chemieabfall wie Rückstände aus chemischer Produktion wie beispielsweise verbrauchte Katalysatoren, Syntheserückstände, Fehlchargen, Destillationssümpfe und Ähnliches; um Brennstoffzellenabfall, dabei insbesondere Membranmaterial aus Brennstoffzellen; und/oder um Elektrolysezellenabfall (Elektrolyseurabfall), dabei insbesondere Membranmaterial aus Elektrolysezellen (Elektrolyseuren) handeln. Für den Fachmann ist dabei klar, dass der im erfindungsgemäßen Verfahren zu veraschende fluor- und edelmetallhaltige Abfall immer organisch chemisches Material oder organisch chemische Materialanteile umfasst. Der Begriff "organisch chemisch" schließt dabei ausdrücklich "metallorganisch" ein; organisch chemisches Material respektive organisch chemische Materialanteile schließen dabei nicht nur per- und polyfluorierte Chemikalien sondern auch organisches Polymermaterial ein wie beispielsweise auch Fluorpolymermaterial als ein typischer Vertreter von Membranmaterial aus Brennstoff- und Elektrolysezellen. Das organisch chemische Material kann auch flüchtige organische Verbindungen umfassen, insbesondere organische Lösemittel. Neben dem Edelmetallanteil und dem organisch chemischen Materialanteil können insbesondere Kohle wie beispielsweise Katalysatorträgermaterial in Form von Aktivkohle, und/oder anorganisches Material wie beispielsweise anorganisches Katalysatorträgermaterial (beispielsweise refraktäres oxidisches Material wie Aluminiumoxid, Siliziumdioxid, Zeolith) umfasst sein. Auch Wasser kann umfasst sein.

Bei Chemieabfall in Form von Rückständen aus chemischer Produktion entstammt der Edelmetallanteil im Allgemeinen darin enthaltenen Edelmetallkatalysatoren respektive Abbauprodukten davon. Bei Membranmaterial aus Brennstoff- und Elektrolysezellen entstammt der Edelmetallanteil üblicherweise einer auf der Membranvorder- und/oder -rückseite befindlichen edelmetallhaltigen Katalysatorschicht. Wie schon erwähnt, bei dem Membranmaterial aus Brennstoff- und Elektrolysezellen entstammt der Fluoranteil üblicherweise der Membran selber, so handelt es sich im Allgemeinen bei dem eigentlichen Membranmaterial um Polymere wie Polytetrafluorethylen oder sogenannte lonomere wie insbesondere Copolymere von Tetrafluorethylen und einem Sulfonsäuregruppe-haltigen (Per)fluorvinylether wie beispielsweise Nation^{®} von Chemours.

Der Fluoranteil des im erfindungsgemäßen Verfahren zu veraschenden fluor- und edelmetallhaltigen Abfalls liegt im Bereich von >5 bis 70 Gew.-%, insbesondere 15 bis 60 Gew.-% und sein Edelmetallanteil liegt im Bereich von 0,1 bis 30 Gew.-%, insbesondere 0,5 bis 8 Gew.-%. Bei den hier genannten Fluor- und Edelmetallanteilen handelt es sich um den Fluor- und Edelmetallanteil einer jeweiligen Charge zu veraschenden fluor- und edelmetallhaltigen Abfalls. Mit anderen Worten, es kann sich bei einer Abfallcharge um von Hause aus homogenen oder zumindest makroskopisch betrachtet homogenen Abfall handeln oder es handelt sich um eine Kombination verschiedener Abfälle respektive Abfallarten; unabhängig davon gilt jedoch immer, dass der individuelle Fluor- und Edelmetallanteil jeder Charge im erfindungsgemäßen Verfahren zu veraschenden fluor- und edelmetallhaltigen Abfalls einen Durchschnittswert im Bereich von >5 bis 70 Gew.-%, insbesondere 15 bis 60 Gew.-% für den Fluoranteil und einen Durchschnittswert im Bereich von 0,1 bis 30 Gew.-%, insbesondere 0,5 bis 8 Gew.-% für den Edelmetallanteil aufweist.

Erfindungsgemäß findet die Veraschung in einem Kammerofen statt, genauer gesagt in der Ofenkammer eines Kammerofens, welcher zentrales Element einer Veraschungsanlage darstellt. Neben dem Kammerofen kann die Veraschungsanlage Einrichtungen zur thermischen Nachverbrennung umfassen. Üblicherweise umfasst die Veraschungsanlage ein Abgasreinigungssystem mit Wäschern zur Entfernung von Fluorwasserstoff respektive Flusssäure sowie weiteren Schadstoffen, die nicht in die Umwelt gelangen sollen.

Bei dem im erfindungsgemäßen Verfahren verwendeten Kammerofen handelt es sich um einen an sich üblichen Kammerofen, üblicherweise mit einer tragenden Metall- oder Stahlkonstruktion respektive einem Metall- oder Stahlmantel der Ofenkammer; erfindungswesentlich ist dabei allerdings, dass die Ofenkammer des Kammerofens ausgekleidet ist mit einem Chromkorundmaterial umfassend ≥80 Gew.-% alpha-Al₂O₃, 1 bis 20 Gew.-% Cr₂O₃ und 0 bis 5 Gew.-% SiOz. Beispielsweise umfasst oder besteht das Chromkorundmaterial aus 80 bis 95 Gew.-% alpha-Al₂O₃, 1 bis 20 Gew.-% Cr₂O₃ und 0 bis 5 Gew.-% SiOz. Bevorzugt umfasst oder besteht das Chromkorundmaterial aus 85 bis 95 Gew.-% alpha-Al₂O₃, 2 bis 15 Gew.-%, insbesondere 5 bis 15 Gew.-% Cr₂O₃ und 0 bis 2 Gew.-%, insbesondere 0 Gew.-% SiOz.

Bei der Chromkorundauskleidung handelt es sich um eine feuerfeste Isolierauskleidung und sie kann in Form einer Stampfmasse, als vorverdichtete Fasern und/oder als Chromkorundstein ausgeführt sein. Die Chromkorundauskleidung kann eine für eine feuerfeste Isolierauskleidung übliche Stärke im Bereich von beispielsweise 10 bis 100 cm aufweisen. Diese innere Isolierauskleidung dient dem Schutz der tragenden Metallkonstruktion respektive des Metallmantels der Ofenkammer in doppelter, d.h. in thermischer und chemischer Hinsicht, zum einen als dauerhafte Feuerfest- respektive thermische Isolierung, zum anderen als dauerhafte Barriere gegen Fluorwasserstoff- oder Flusssäurezutritt zum Metall. Hervorzuheben ist dabei die vergleichsweise hohe Dauerhaftigkeit der Schutzwirkung, wodurch das erfindungsgemäße Verfahren im Dauerbetrieb betrieben werden kann, obwohl der Fluoranteil des zu veraschenden fluor- und edelmetallhaltigen Abfalls außergewöhnlich hoch ist. In dem Kontext bedeutet Dauerbetrieb zwei oder mehr Jahre (beispielsweise 2000 oder mehr Veraschungszyklen), ohne dass eine Revision ansteht oder eine Reparatur oder ein Austausch der Isolierauskleidung erforderlich wird.

Wie gesagt, in Schritt (1) des erfindungsgemäßen Verfahrens wird ein zu veraschender fluor- und edelmetallhaltiger Abfall mit einem Fluoranteil im Bereich von >5 bis 70 Gew.-% und einem Edelmetallanteil im Bereich von 0,1 bis 30 Gew.-% in die Ofenkammer eingebracht, d.h. die Ofenkammer wird damit beschickt. Hierfür umfasst die Ofenkammer eine Öffnung zum Einbringen der entsprechenden Materialien. Die Ofenkammer kann mit Luftunter- bzw. mit Luftüberschuss betrieben werden. Was die Darbietung des zu veraschenden fluor- und edelmetallhaltigen Abfalls in der Ofenkammer angeht, die Ofenkammer kann im Inneren Vorrichtungen zur Veraschung des zu veraschenden fluor- und edelmetallhaltigen Abfalls aufweisen. Hierbei handelt es sich beispielsweise um Roste zur Aufnahme von Wannen zur Verbrennung fester Materialien. Dünn- oder zähflüssige Materialien können entweder in Wannen oder über entsprechende Dosiereinrichtungen in die Ofenkammer eingebracht und dort verascht werden.

In Schritt (2) des erfindungsgemäßen Verfahrens findet das eigentliche Veraschen des Abfalls statt. Dazu wird die Ofentemperatur (die Temperatur im Inneren der Ofenkammer) auf eine der Veraschung dienliche Temperatur eingestellt, d.h. es wird aufgeheizt. Die Ofentemperatur liegt während der Veraschung im Bereich von 650 bis 950°C als Dauertemperatur (kurzfristige Temperaturspitzen von bis zu 1200°C sind möglich). Es kann sich bei der Dauertemperatur um eine nach Erreichen im Wesentlichen konstante Temperatur handeln oder es handelt sich um ein im besagten Dauertemperaturbereich gefahrenes Temperaturprogramm. Zum Zweck des Aufheizens auf die Dauertemperatur können nach Beschicken und Schließen der Ofenkammer alle üblichen Methoden von Energiezufuhr zur Anwendung kommen, d.h. sowohl direktes als auch indirektes Beheizen der Ofenkammer, beispielsweise Gasbefeuerung, Ölbefeuerung und/oder Elektrobeheizung. Bevorzugt ist indirektes Beheizen mit Heißgas, insbesondere Heißluft. Die Aufheizgeschwindigkeit kann beispielsweise sogar bis zu 200°C pro Stunde betragen, was vergleichsweise hoch ist. Vorteilhafterweise erweist sich die Chromkorundauskleidung als ausgesprochen temperaturwechselbeständig, sowohl hinsichtlich der Geschwindigkeit eines Temperaturwechsels als auch hinsichtlich der Häufigkeit von Temperaturwechseln.

Das Veraschen bei Dauertemperatur einer Abfallcharge dauert üblicherweise im Bereich von 4 bis 15 Stunden. Für den Fachmann an sich unnötig zu erwähnen, bei Vorhandensein flüchtiger Bestandteile wie organisches Lösemittel und/oder Wasser im zu veraschenden fluor- und edelmetallhaltigen Abfall kommt es vor dem eigentlichen Veraschen vor oder beim Beschicken der Ofenkammer und/oder beim Aufheizvorgang in Schritt (2) zunächst zu einem Verdampfen solcher flüchtiger Bestandteile.

Während des Veraschens bildet sich eine Ofenatmosphäre mit einem Abgas respektive aus einem Abgas, welches als Folge des hohen Fluoranteils des zu veraschenden fluor- und edelmetallhaltigen Abfalls in erheblichem Maße Fluorwasserstoff umfasst, welcher mit Wasser Flusssäure bildet.

In Schritt (3) des erfindungsgemäßen Verfahrens wird die nach Abschluss von Schritt (2) gebildete Asche der Ofenkammer entnommen. Die Asche zeichnet sich durch Edelmetallanreicherung gegenüber dem zu veraschenden fluor- und edelmetallhaltigen Abfall aus, d.h. ihr Edelmetallanteil liegt beispielsweise im Bereich von 0,5 bis 60 Gew.-%. Das Edelmetall kann dabei elementar in metallischer Form, als Oxid, Oxyfluorid und/oder Fluorid vorliegen. Ferner kann mineralisches Material in der Asche enthalten sein, beispielsweise ein Aktivkohlematerial entstammendes mineralisches Material wie beispielsweise Kaliumcarbonat oder ein anorganischem Katalysatorträgermaterial entstammendes mineralisches Material wie beispielsweise vorerwähntes refraktäres oxidisches Material. Je nach Vollständigkeit des Veraschungsprozesses aus Schritt (2) kann die Asche auch Anteile von verkoktem Material, Koks und/oder Kohle umfassen.

Die edelmetallhaltige Asche kann nach üblichen Verfahren zwecks Edelmetallrückgewinnung insbesondere nasschemisch aufgearbeitet werden.

Zusammengefasst, bietet das erfindungsgemäße Verfahren unter anderem folgende Vorteile gegenüber dem beispielsweise durch EP 2 700 726 A1 repräsentierten Stand der Technik:
1. Das erfindungsgemäße Verfahren kann mit fluor- und edelmetallhaltigem Abfall trotz hohem Fluoranteil von >5 bis 70 Gew.-% durchgeführt werden, auch im Dauerbetrieb.
2. Das erfindungsgemäße Verfahren kann mit hoher Aufheizgeschwindigkeit durchgeführt werden. Die damit ermöglichten schnellen Temperaturwechsel in der Ofenkammer erlauben vergleichsweise kurze Bearbeitungszeiten einer individuellen Charge, damit einhergehend schnelle Chargenwechsel und insofern eine hohe Kapazität im Dauerbetrieb (hohe Raum/ZeitAusbeute).
3. Das erfindungsgemäße Verfahren kann über viele Zyklen oder über einen langen Zeitraum im Dauerbetrieb durchgeführt werden, bevor eine Unterbrechung aufgrund einer notwendig werdenden Revision, Reparatur oder einem notwendig werdenden Austausch der Chromkorundisolierauskleidung notwendig wird.

## Patentansprüche

1. Verfahren zur Veraschung fluor- und edelmetallhaltigen Abfalls in einem Kammerofen, **dadurch gekennzeichnet, dass** der Fluoranteil des Abfalls im Bereich von >5 bis 70 Gew.-% und der Edelmetallanteil des Abfalls im Bereich von 0,1 bis 30 Gew.-% liegt und dass die Ofenkammer des Kammerofens ausgekleidet ist mit einem Chromkorundmaterial umfassend ≥80 Gew.-% alpha-Al₂O₃, 1 bis 20 Gew.-% Cr₂O₃ und 0 bis 5 Gew.-% SiO₂.

2. Verfahren nach Anspruch 1 umfassend die aufeinanderfolgenden Schritte: (1) Einbringen eines zu veraschenden fluor- und edelmetallhaltigen Abfalls mit einem Fluoranteil im Bereich von >5 bis 70 Gew.-% und einem Edelmetallanteil im Bereich von 0,1 bis 30 Gew.-% in die Ofenkammer eines Kammerofens, (2) Veraschen des Abfalls, und (3) Entnahme der nach Abschluss von Schritt (2) gebildeten Asche, wobei die Ofenkammer des Kammerofens ausgekleidet ist mit einem Chromkorundmaterial umfassend ≥80 Gew.-% alpha-Al₂O₃, 1 bis 20 Gew.-% Cr₂O₃ und 0 bis 5 Gew.-% SiO₂.

3. Verfahren nach Anspruch 1 oder 2, wobei es sich bei dem fluor- und edelmetallhaltigen Abfall um Chemieabfall, Brennstoffzellenabfall und/oder Elektrolysezellenabfall handelt.

4. Verfahren nach einem der vorhergehenden Ansprüche, wobei der Fluoranteil des fluor- und edelmetallhaltigen Abfalls im Bereich von 15 bis 60 Gew.-% liegt.

5. Verfahren nach einem der vorhergehenden Ansprüche, wobei der Edelmetallanteil des fluor- und edelmetallhaltigen Abfalls im Bereich von 0,5 bis 8 Gew.-% liegt.

6. Verfahren nach einem der vorhergehenden Ansprüche, wobei das Chromkorundmaterial 80 bis 95 Gew.-% alpha-Al₂O₃, 1 bis 20 Gew.-% Cr₂O₃ und 0 bis 5 Gew.-% SiO₂ umfasst oder daraus besteht.

7. Verfahren nach einem der Ansprüche 1 bis 5, wobei das Chromkorundmaterial 85 bis 95 Gew.-% alpha-Al₂O₃, 2 bis 15 Gew.-% Cr₂O₃ und 0 bis 2 Gew.-% SiO₂ umfasst oder daraus besteht.

8. Verfahren nach einem der vorhergehenden Ansprüche, wobei die Chromkorundauskleidung in Form einer Stampfmasse, als vorverdichtete Fasern und/oder als Chromkorundstein ausgeführt ist.

9. Verfahren nach einem der vorhergehenden Ansprüche, wobei die Ofentemperatur während der Veraschung im Bereich von 650 bis 950°C als Dauertemperatur liegt.

## Claims

1. A method for incinerating fluorine- and noble-metal-containing waste in a chamber furnace, **characterized in that** the fluorine content of the waste is in the range of from >5 to 70 wt.% and the noble metal content of the waste is in the range of from 0.1 to 30 wt.%, **and in that** the furnace chamber of the chamber furnace is lined with a chrome corundum material comprising ≥80 wt.% alpha-Al₂O₃, 1 to 20 wt.% Cr₂O₃ and 0 to 5 wt.% SiO₂.

2. The method according to claim 1, comprising the successive steps of: (1) introducing fluorine- and noble-metal-containing waste to be incinerated, which waste has a fluorine content in the range of from >5 to 70 wt.% and a noble metal content in the range of from 0.1 to 30 wt.%, into the furnace chamber of a chamber furnace, (2) incinerating the waste, and (3) removing the ash formed after the completion of step (2), wherein the furnace chamber of the chamber furnace is lined with a chrome corundum material comprising ≥80 wt.% alpha-Al₂O₃, 1 to 20 wt.% Cr₂O₃ and 0 to 5 wt.% SiO₂.

3. The method according to claim 1 or 2, wherein the fluorine- and noble-metal-containing waste is chemical waste, fuel cell waste and/or electrolysis cell waste.

4. The method according to any of the preceding claims, wherein the fluorine content of the fluorine- and noble-metal-containing waste is in the range of from 15 to 60 wt.%.

5. The method according to any of the preceding claims, wherein the noble metal content of the fluorine- and noble-metal-containing waste is in the range of from 0.5 to 8 wt.%.

6. The method according to any of the preceding claims, wherein the chrome corundum material comprises or consists of 80 to 95 wt.% alpha-Al₂O₃, 1 to 20 wt.% Cr₂O₃ and 0 to 5 wt.% SiO₂.

7. The method according to any of claims 1 to 5, wherein the chrome corundum material comprises or consists of 85 to 95 wt.% alpha-Al₂O₃, 2 to 15 wt.% Cr₂O₃ and 0 to 2 wt.% SiO₂.

8. The method according to any of the preceding claims, wherein the chrome corundum lining is designed in the form of a ramming mass, as pre-compacted fibers and/or as a chrome corundum brick.

9. The method according to any of the preceding claims, wherein the furnace temperature during incineration is in the range of from 650 to 950°C as a continuous temperature.

## Revendications

1. Procédé pour l'incinération de déchets contenant du fluor et des métaux précieux dans un four à chambre, **caractérisé en ce que** la teneur en fluor des déchets se situe dans la plage allant de > 5 à 70 % en poids et la teneur en métaux précieux des déchets se situe dans la plage allant de 0,1 à 30 % en poids **et en ce que** la chambre de four du four à chambre est revêtue d'un matériau en corindon de chrome comprenant ≥ 80 % en poids d'alpha-Al₂O₃, 1 à 20 % en poids de Cr₂O₃ et 0 à 5 % en poids de SiO₂.

2. Procédé selon la revendication 1, comprenant les étapes consécutives : (1) introduction de déchets contenant du fluor et des métaux précieux à incinérer, comportant une teneur en fluor dans la plage allant de > 5 à 70 % en poids et une teneur en métaux précieux dans la plage allant de 0,1 à 30 % en poids, dans la chambre de four d'un four à chambre, (2) incinération des déchets, et (3) extraction des cendres formées à la fin de l'étape (2), dans lequel la chambre de four du four à chambre est revêtue d'un matériau en corindon de chrome comprenant ≥ 80 % en poids d'alpha-Al₂O₃, 1 à 20 % en poids de Cr₂O₃ et 0 à 5 % en poids de SiO₂.

3. Procédé selon la revendication 1 ou 2, dans lequel les déchets contenant du fluor et des métaux précieux sont des déchets chimiques, des déchets de piles à combustible et/ou des déchets de cellules d'électrolyse.

4. Procédé selon l'une des revendications précédentes, dans lequel la teneur en fluor des déchets contenant du fluor et des métaux précieux se situe dans la plage allant de 15 à 60 % en poids.

5. Procédé selon l'une des revendications précédentes, dans lequel la teneur en métaux précieux des déchets contenant du fluor et des métaux précieux se situe dans la plage allant de 0,5 à 8 % en poids.

6. Procédé selon l'une des revendications précédentes, dans lequel le matériau en corindon de chrome comprend ou est constitué de 80 à 95 % en poids d'alpha-Al₂O₃, 1 à 20 % en poids de Cr₂O₃ et 0 à 5 % en poids de SiO₂.

7. Procédé selon l'une des revendications 1 à 5, dans lequel le matériau en corindon de chrome comprend ou est constitué de 85 à 95 % en poids d'alpha-Al₂O₃, 2 à 15 % en poids de Cr₂O₃ et 0 à 2 % en poids de SiO₂.

8. Procédé selon l'une des revendications précédentes, dans lequel le revêtement de corindon de chrome est réalisé sous la forme d'un pisé, de fibres précomprimées et/ou d'une pierre de corindon de chrome.

9. Procédé selon l'une des revendications précédentes, dans lequel la température de four pendant l'incinération se situe dans la plage allant de 650 à 950 °C en tant que température constante.
